# FASCICULE DE BREVET EUROPEEN

(11) **EP 0 820 390 B1**
(45) Date de publication et mention de la délivrance du brevet: **29.12.1999**
(21) Numéro de dépôt: 96912077.3
(22) Date de dépôt: 05.04.1996
(51) Int. Cl.: B60R 5/04

(54) **DISPOSITIF DE MONTAGE DE LA TABLETTE ARRIERE D'UN VEHICULE AUTOMOBILE**
BEFESTIGUNGSANORDNUNG FÜR EINE HINTERE ABDECKPLATTE EINES FAHRZEUGS
DEVICE FOR MOUNTING A MOTOR VEHICLE REAR WINDOW SHELF

(30) Priorité: 10.04.1995 FR 9504247
(43) Date de publication de la demande: 28.01.1998
(73) Titulaire: Etablissements TREVES, F-75008 Paris (FR)
(72) Inventeur: DE LA TAILLE, Olivier, F-78160 Marly-le-Roi (FR); DU PENHOAT, Vincent, F-29000 Quimper (FR)
(74) Mandataire: Geismar, Thierry
(86) Numéro de dépôt international: FR9600525
(87) Numéro de publication internationale: WO9632301

(56) Documents cités:
- EP-A- 0 085 851
- FR-A- 2 281 855
- FR-A- 2 364 787
- FR-A- 2 641 506
- GB-A- 2 173 456
- US-A- 4 648 648
- US-A- 5 037 154
- US-A- 5 257 846

## Description

La présente invention concerne un dispositif de montage de la tablette arrière d'un véhicule automobile, et plus particulièrement un tel dispositif destiné au montage de la tablette sur ses supports latéraux.

Les véhicules automobiles du type à trois ou cinq portes ont de façon connue une tablette arrière amovible, de manière à permettre de dégager totalement le volume situé derrière la banquette arrière. Ces tablettes sont en outre généralement montées pivotantes de manière à pouvoir se soulever pour faciliter l'accès au coffre à bagages. A cet effet, elles sont souvent attachées au hayon arrière par un lien souple de façon à se soulever en même temps que ce dernier.

Les tablettes connues comportent, pour répondre à ces objectifs, un système d'articulation, par exemple deux doigts cylindriques de support et de rotation montés de part et d'autre de la tablette dans le prolongement l'un de l'autre, perpendiculairement au plan de symétrie du véhicule. Ces doigts peuvent être montés sur la tablette par tout moyen connu, par exemple sous la forme d'un insert, ou encore vissés dans un insert lui-même surmoulé. Ils sont destinés à s'engager dans des pièces de réception solidaires de supports latéraux de réception eux-même fixés au chassis du véhicule.

Un dispositif de montage de la tablette arrière d'un véhicule ayant les caractéristiques du préambule de la revendication 1 est décrit dans le document EP-A-0 085 851.

Ces dispositifs présentent un certain nombre d'inconvénients. En premier lieu, les doigts de support et de rotation dépassent des bords latéraux de la tablette lorsque celle-ci est retirée de sa position d'utilisation. Il en résulte un risque pour ces doigts d'être accrochés lors du montage ou du démontage de la tablette et d'endommager les parois intérieures du véhicule, ou de s'endommager eux- même.

En outre, ces agencements sont compliqués, et donc coûteux, à fabriquer et ils nécessitent des pièces dont le nombre doit être réduit dans la mesure du possible.

La présente invention vise à pallier ces inconvénients.

A cet effet, l'invention a pour objet un dispositif de montage de la tablette arrière d'un véhicule automobile sur ses supports latéraux, caractérisé par le fait qu'il comprend les deux coins avant de ladite tablette et deux éléments d'accouplement solidaires desdits supports et agencés pour recevoir lesdits coins, lesdits éléments et lesdits coins étant agencés pour permettre une rotation de la tablette par rapport audit support, et des surfaces de butée complémentaires étant prévues sur lesdits coins et sur lesdits éléments d'accouplement pour empêcher un mouvement vers l'arrière de la tablette lorsqu'elle est en position d'utilisation, sensiblement horizontale.

Dans un mode de réalisation particulier de l'invention, lesdits éléments d'accouplement sont agences pour permettre un engagement des coins dans les éléments d'accouplement par un mouvement vers l'avant de la tablette par rapport à ses supports latéraux sous un angle faible de la tablette par rapport à l'horizontale.

Plus particulièrement, lesdits coins et lesdits éléments d'accouplement peuvent être agencés pour permettre l'extraction de ladite tablette par un mouvement vers l'arrière et vers le haut de cette tablette par rapport à ses supports latéraux sous une certaine inclinaison de la tablette par rapport à l'horizontale.

En particulier, chacun desdits éléments d'accouplement peut former une cavité généralement cylindrique de génératrices sensiblement perpendiculaires au plan médian du véhicule, ouverte au moins du côté dudit plan, ainsi qu'entre deux génératrices pour former une ouverture d'engagement desdits coins, ladite ouverture étant généralement dirigée vers le haut et vers l'arrière.

Plus particulièrement, ladite cavité peut être délimitée par une enveloppe dont au moins la partie proche de l'ouverture est élastique, ledit coin ayant une épaisseur telle que ladite partie élastique est déformée lorsque la tablette est en position de fonctionnement horizontale.

On peut notamment prévoir que lesdites surfaces de butée forment un épaulement dirigé vers l'arrière formé sur chacun desdits coins et un épaulement dirigé vers l'avant formé sur chacun desdits éléments d'accouplement, lesdits épaulements coopérant lorsque lesdits coins sont engagés dans lesdits éléments d'accouplement avec la tablette en position sensiblement horizontale.

Lesdits éléments d'accouplement peuvent en particulier être agencés pour permettre un mouvement, jusqu'à un point de butée, de la tablette vers l'avant et vers le bas par rapport à ses supports latéraux sous une certaine inclinaison de la tablette par rapport à l'horizontale, et pour empêcher un mouvement de rotation de la tablette lorsqu'elle est à ce point de butée.

Plus particulièrement, ladite cavité peut possèder un prolongement généralement dirigé vers l'avant et vers le bas, apte à recevoir ledit coin lorsque ladite tablette se trouve sous ladite certaine inclinaison.

Ledit prolongement peut notamment posséder à son fond dirigé vers l'avant et vers le bas des moyens élastiques agencés pour permettre un jeu de ladite tablette dans cette direction.

L'agencement selon l'invention permet en premier lieu de limiter le nombre de composants, ce qui simplifie la gestion des pièces détachées tant au niveau de la fabrication que des services après-vente. Cette limitation du nombre de composants va également dans le sens de l'obtention de produits plus facilement recyclables.

En outre, l'industrialisation du produit est simplifiée en ce sens que les opérations de finition sont considérablement réduites par rapport à celles de l'art antérieur.

On décrira maintenant, à titre d'exemples non limitatifs, des modes de réalisation particuliers de l'invention, en référence aux dessins schématiques annexés dans lesquels:
- les figures 1a ,1b et 1c représentent en vue schématique de coté une des variantes de l'invention dans laquelle la tablette et son support se trouvent dans trois positions typiques différentes;
- les figures 2a et 2b représentent également en vue schématique de coté deux étapes du fonctionnement d'un autre mode de réalisation de l'invention;
- les figures 3a à 3d sont des vues en perspective illustrant le fonctionnement du dispositif des figures 1; et
- la figure 4 est une vue similaire à celle des figures 3, relative au dispositif des figures 2.

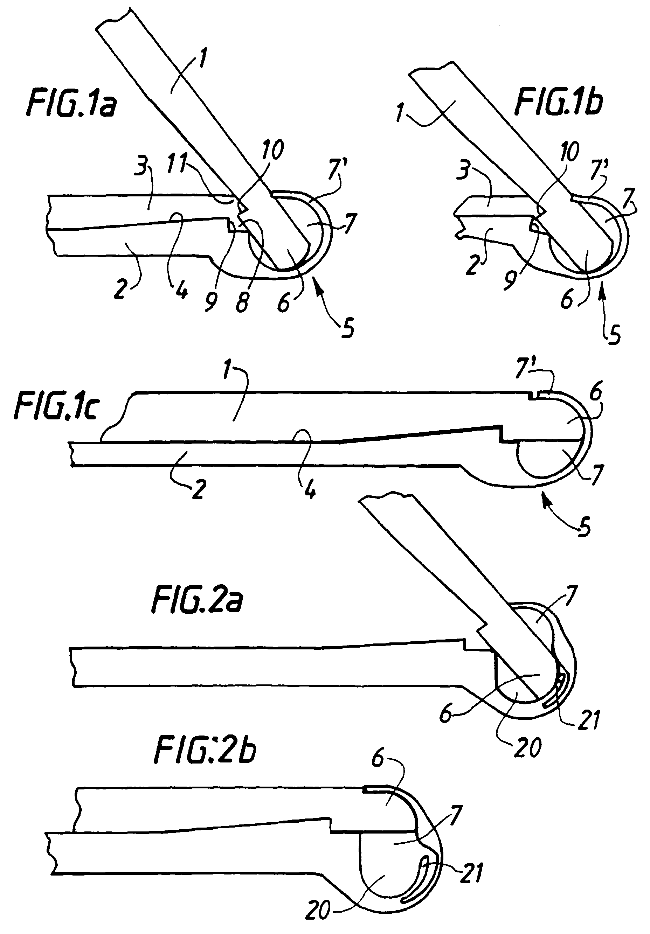

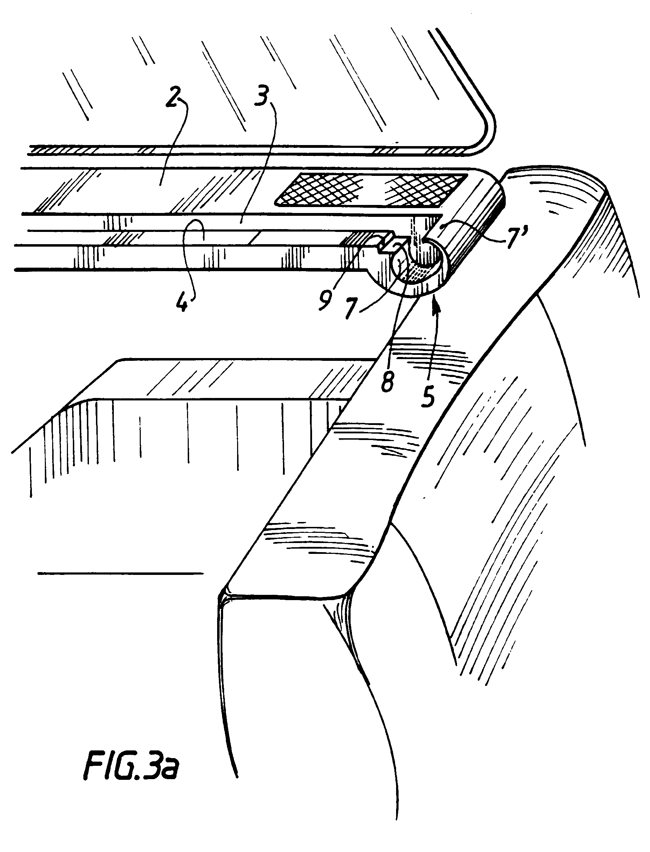

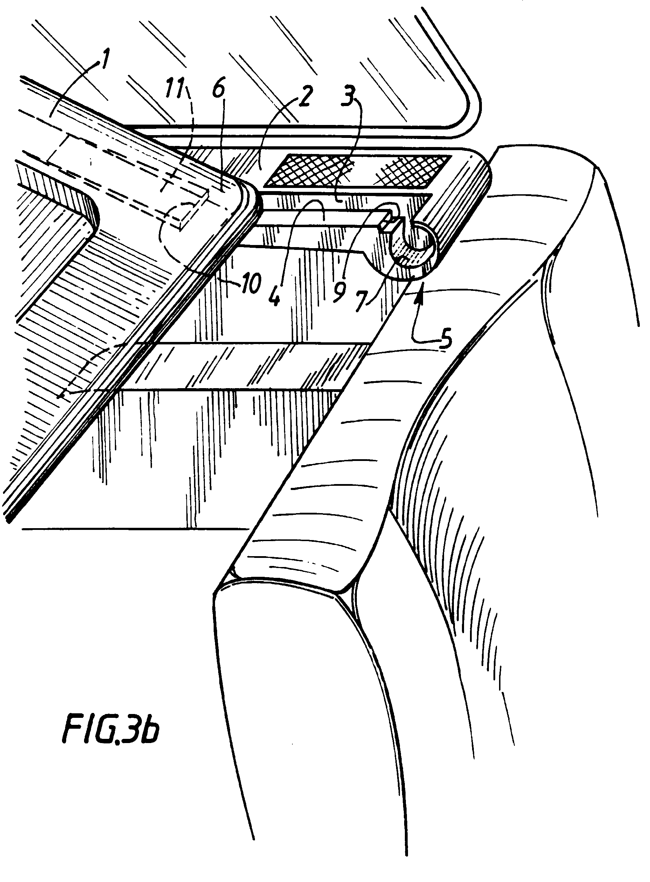

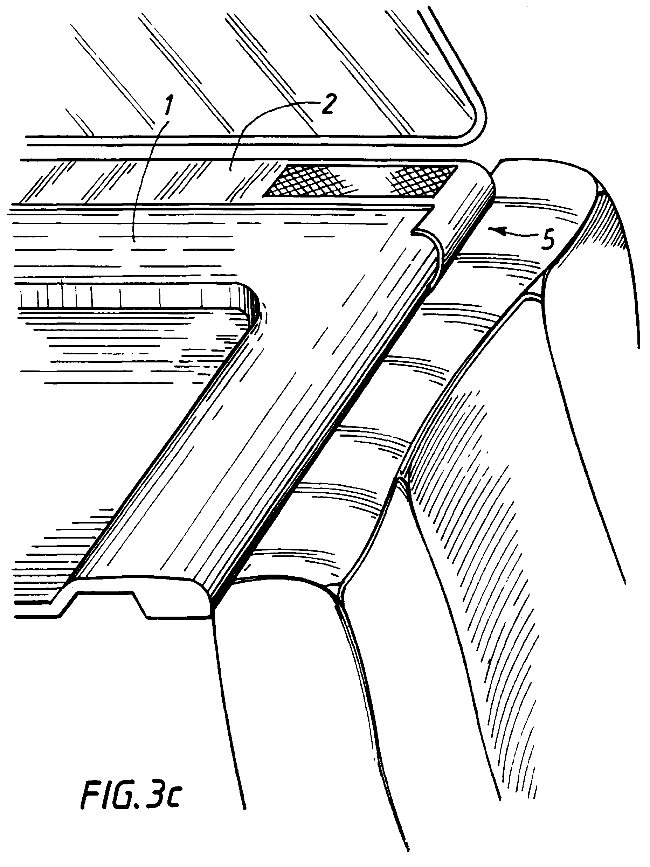

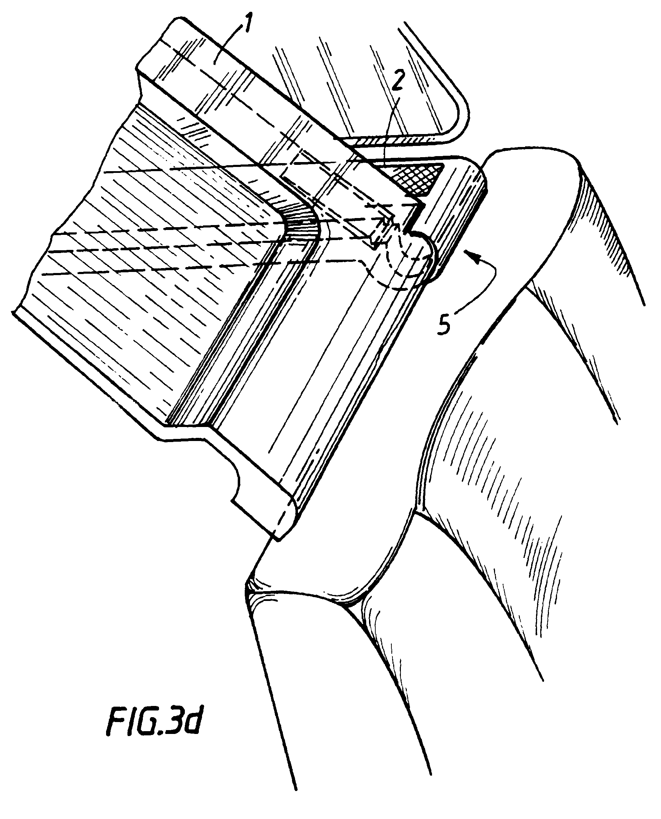

Les figures 1 et 3 montrent une tablette arrière 1 de véhicule automobile et un support latéral 2 de tablette. Bien entendu, le véhicule possède deux supports latéraux sensiblement symétriques par rapport au plan médian du véhicule. Le support 2 forme un décrochement 3 au niveau de sa bordure libre, apte à recevoir le bord correspondant de la tablette sur une surface d'appui 4 tournée vers le haut, la surface supérieure de la tablette et son support étant alors de niveau.

A son extrémité avant, le support forme un élément d'accouplement 5 agencé pour recevoir le coin avant correspondant 6 de la tablette 1. Cet élément 5 est pour l'essentiel formé d'une cavité 7, généralement cylindrique à génératrices perpendiculaires au plan médian du véhicule. Cette cavité est ouverte vers le haut entre deux de ses génératrices et sur son coté tourné vers le plan médian du véhicule.

La cavité 7 est délimitée par une enveloppe 7' qui présente, au moins en partie supérieure à proximité de son ouverture, une certaine élasticité. Le coin 6 de la tablette possède une épaisseur telle que, lorsque la tablette est en position horizontale, la partie supérieure de l'enveloppe 7' soit légèrement déformée vers le haut et, ainsi, plaque la tablette sur ses supports, ce qui a pour effet de limiter ses vibrations (en d'autres termes, l'épaisseur du coin 6 est supérieure à la distance verticale séparant le bord libre de l'enveloppe 7' de la surface horizontale du décrochement 8 qui va maintenant être décrit.

Le décrochement 3 se termine dans la cavité 7 par un deuxième décrochement 8 dont un épaulement formant une surface de butée 9 tournée vers l'avant du véhicule. La surface de butée 9 est agencée pour coopérer avec un épaulement formant une surface complémentaire 10 formée sur la tablette arrière 1 au fond, du coté de l'avant du véhicule, d'un évidement 11.

Les surfaces du décrochement 8 et les surfaces complémentaires du coin 6 sont avantageusement garni de patins anti-bruit en caoutchouc, qui permettent également de limiter l'usure due au frottement dans ces zones.

La tablette 1 est introduite à son emplacement en faisant glisser vers l'avant ses coins 6 sur les surfaces 4, tout en la maintenant légèrement inclinée par rapport à ses supports latéraux 2. Cette étape est illustrée à la figure 3b.

Lorsque la tablette arrive en bout de course, ses coins s'engagent dans les cavités 7. La tablette peut alors être basculée à l'horizontale dans la position représentée aux figures 1c et 3c. Cette position est sa position normale de fonctionnement, où les surfaces de butée 9 et 10 empêchent tout mouvement vers l'arrière de la tablette 1.

Dans cette position, la tablette peut être soulevée pour donner un accès aisé au coffre à bagages, le bord avant de la tablette glissant contre la paroi cylindrique intérieure de la cavité 7.

Lorsque l'on souhaite retirer la tablette 1, on la fait pivoter comme représenter à la figure 1, de sorte que les surfaces de butée 9 et 10 se trouvent dégagées l'une de l'autre. La tablette 1 peut alors être retirée en la tirant vers le haut et vers l'arrière.

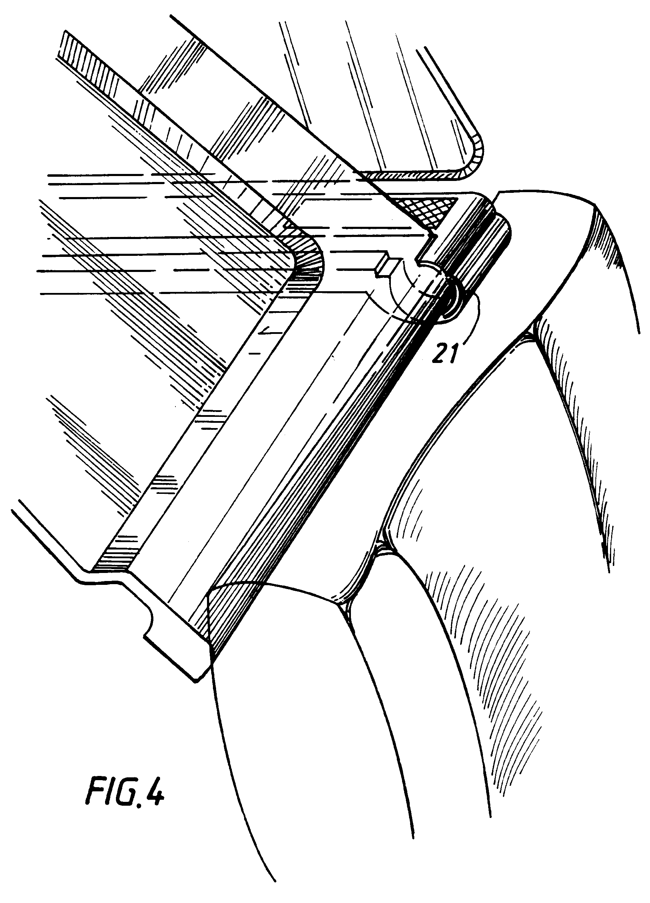

Les figures 2 et 4 ne différent des figures 1 et 3 que par le fait que la cavité 7 est ici prolongée en 20 vers l'avant et vers le bas. Lorsque la tablette est dans sa position de fonctionnement de la figure 2b, elle peut être pivotée vers le haut, jusqu'à une position où elle peut être déplacée vers l'avant et vers le bas dans une nouvelle position où le bord avant du coin 6 peut s'engager dans le prolongement 20.

Dans cette position, la tablette est en butée contre les arêtes de la cavité 7, ce qui permet de la maintenir dans la position représentée à la figure 2a, sans utiliser les liens souples dont il a été question ci-dessus.

La tablette peut être soit retirée soit ramenée dans la position de la figure 2b en la tirant vers le haut et vers l'arrière.

Les figures 2 et 4 montrent en outre que le fond, dans la direction du bas et de l'avant, des prolongements 20, des cavités 7, est muni d'une languette élastique 21 sur laquelle le bord avant des coins 6 vient en appui lorsque la tablette 1 vient dans la position de la figure 2a. Cette languette aide au dégagement de la tablette du logement 7 en vue de son rabattement en position horizontale. Elle permet en outre d'éviter que la tablette ne subisse de trop fortes contraintes et, en particulier, ne se brise lorsqu'elle reçoit un choc de l'arrière sous l'action, par exemple, de la fermeture du hayon.

## Revendications

1. Dispositif de montage de la tablette arrière (1) d'un véhicule automobile sur ses supports latéraux (2), caractérisé par le fait qu'il comprend les deux coins avant (6) de ladite tablette et deux éléments d'accouplement (5) solidaires desdits supports et agencés pour recevoir lesdits coins, lesdits éléments et lesdits coins étant agencés pour permettre une rotation de la tablette par rapport audit support, et des surfaces de butée complémentaires (9,10) étant prévues sur lesdits coins et sur lesdits éléments d'accouplement pour empêcher un mouvement vers l'arrière de la tablette lorsqu'elle est en position d'utilisation, sensiblement horizontale.

2. Dispositif selon la revendication 1, dans lequel lesdits coins et lesdits éléments d'accouplement sont agencés pour permettre un engagement des coins dans les éléments d'accouplement par un mouvement vers l'avant de la tablette par rapport à ses supports latéraux sous un angle faible de la tablette par rapport à l'horizontale.

3. Dispositif selon l'une quelconque des revendications 1 et 2, dans lequel lesdits coins et lesdits éléments d'accouplement sont agencés pour permettre l'extraction de ladite tablette par un mouvement vers l'arrière et vers le haut de cette tablette par rapport à ses supports latéraux sous une certaine inclinaison de la tablette par rapport à l'horizontale.

4. Dispositif selon l'une quelconque des revendications 1 à 3, dans lequel chacun desdits éléments d'accouplement forme une cavité (7) généralement cylindrique, de génératrices sensiblement perpendiculaires au plan médian du véhicule, ouverte au moins du côté dudit plan, ainsi qu'entre deux génératrices pour former une ouverture d'engagement desdits coins, ladite ouverture étant généralement dirigée vers le haut et vers l'arrière.

5. Dispositif selon la revendication 4, dans lequel ladite cavité est délimitée par une enveloppe (7') dont au moins la partie proche de l'ouverture est élastique, ledit coin ayant une épaisseur telle que ladite partie élastique est déformée lorsque la tablette est en position de fonctionnement horizontale.

6. Dispositif selon l'une quelconque des revendications 1 à 5, dans lequel lesdites surfaces de butée forment un épaulement (10) dirigé vers l'arrière formé sur chacun desdits coins et un épaulement (9) dirigé vers l'avant formé sur chacun desdits éléments d'accouplement, lesdits épaulements coopérant lorsque lesdits coins sont engagés dans lesdits éléments d'accouplement avec la tablette en position sensiblement horizontale.

7. Dispositif selon l'une quelconque des revendications 1 à 6, dans lequel lesdits éléments d'accouplement sont agencés pour permettre un mouvement, jusqu'à un point de butée, de la tablette vers l'avant et vers le bas par rapport à ses supports latéraux sous une certaine inclinaison de la tablette par rapport à l'horizontale, et pour empêcher un mouvement de rotation de la tablette vers l'arrière et vers le bas lorsqu'elle est à ce point de butée.

8. Dispositif selon l'ensemble des revendications 4 et 7, dans lequel ladite cavité possède un prolongement (20) généralement dirigé vers l'avant et vers le bas, apte à recevoir ledit coin lorsque ladite tablette se trouve sous ladite certaine inclinaison.

9. Dispositif selon la revendication 8, dans lequel ledit prolongement possède à son fond dirigé vers l'avant et vers le bas des moyens élastiques (21) agencés pour permettre un jeu de ladite tablette dans cette direction.

## Claims

1. Device for mounting the rear shelf (1) of a motor vehicle on its lateral supports (2), characterized in that it comprises the two front corners (6) of the said shelf and two coupling elements (5) integral with the said supports and arranged to receive the said corners, the said elements and said corners being arranged to allow the shelf to rotate relative to the said support, and complementary abutment surfaces (9, 10) being provided on the said corners and on the said coupling elements, in order to prevent a rearward movement of the shelf when it is in the substantially horizontal position of use.

2. Device according to Claim 1, wherein the said corners and said coupling elements are arranged to allow the corners to engage into the coupling elements by means of a forward movement of the shelf relative to its lateral supports, with the shelf being at a slight angle relative to the horizontal.

3. Device according to either one of Claims 1 and 2, wherein the said corners and said coupling elements are arranged to allow the said shelf to be extracted by means of a rearward and upward movement of this shelf relative to its lateral supports, with the shelf being at some inclination relative to the horizontal.

4. Device according to any one of Claims 1 to 3, wherein each of the said coupling elements forms a generally cylindrical cavity (7) which has generatrices substantially perpendicular to the mid-plane of the vehicle and which is open at least on the same side as the said plane and between two generatrices, so as to form an orifice for the engagement of the said corners, the said orifice being generally directed upwards and rearwards.

5. Device according to Claim 4, wherein the said cavity is delimited by a casing (7'), of which at least the part near the orifice is elastic, the said corner having a thickness such that the said elastic part is deformed when the shelf is in the horizontal operating position.

6. Device according to any one of Claims 1 to 5, wherein the said abutment surfaces form a shoulder (10) directed rearwards and formed on each of the said corners and a shoulder (9) directed forwards and formed on each of the said coupling elements, the said shoulders co-operating when the said corners are engaged in the said coupling elements, with the shelf being in the substantially horizontal position.

7. Device according to any one of Claims 1 to 6, wherein the said coupling elements are arranged to allow a movement, as far as an abutment point, of the shelf forwards and downwards relative to its lateral supports, with the shelf being at some inclination relative to the horizontal, and to prevent a rotational movement of the shelf rearwards and downwards when it is at this abutment point.

8. Device according to Claims 4 and 7 taken as a whole, wherein the said cavity possesses an extension (20) generally directed forwards and downwards and capable of receiving the said corner when the said shelf is at the said some inclination.

9. Device according to Claim 8, wherein the said extension possesses, at its bottom directed forwards and downwards, elastic means (21) arranged to allow a play of the said shelf in this direction.

## Patentansprüche

1. Vorrichtung zur Befestigung der Laderaumabdeckung (1) eines Kraftfahrzeugs an ihren Seitenstützen (2), dadurch gekennzeichnet, daß sie die beiden Vorderecken (6) der Abdeckung und zwei fest mit den Stützen verbundene Verbindungselemente (5), die zur Aufnahme der Ecken angeordnet sind, umfaßt, wobei die Elemente und die Ecken so angeordnet sind, daß sie eine Drehung der Abdeckung bezüglich der Stütze gestatten, und wobei komplementäre Anschlagflächen (9, 10) an den Ecken und an den Verbindungselementen vorgesehen sind, um eine Bewegung der Abdeckung nach hinten zu verhindern, wenn sie sich in im wesentlicher horizontaler Gebrauchsstellung befindet.

2. Vorrichtung nach Anspruch 1, bei der die Ecken und die Verbindungselemente so angeordnet sind, daß sie einen Eingriff der Ecken in die Verbindungselemente durch eine Bewegung der Abdeckung bezüglich ihrer Seitenstützen nach vorne in einem kleinen Winkel der Abdeckung bezüglich der Horizontalen gestatten.

3. Vorrichtung nach Anspruch 1 oder 2, bei der die Ecken und die Verbindungselemente so angeordnet sind, daß sie das Herausziehen der Abdeckung durch eine Bewegung dieser Abdeckung bezüglich ihrer Seitenstützen nach hinten und nach oben unter einer bestimmten Neigung der Abdeckung bezüglich der Horizontalen gestatten.

4. Vorrichtung nach einem der Ansprüche 1 bis 3, bei der jedes der Verbindungselemente einen allgemein zylindrischen Hohlraum (7) mit im wesentlichen senkrecht zur mittleren Ebene des Fahrzeugs verlaufenden Erzeugenden bildet, der zumindest auf der Seite der Ebene sowie zwischen zwei Erzeugenden offen ist, um eine Öffnung zum Eingriff der Ecken zu bilden, wobei die Öffnung allgemein nach oben und nach hinten ausgerichtet ist.

5. Vorrichtung nach Anspruch 4, bei der der Hohlraum durch eine Umhüllung (7') begrenzt wird, von der mindestens der nahe der Öffnung liegende Teil elastisch ist, wobei die Ecke eine solche Dicke aufweist, daß der elastische Teil verformt wird, wenn sich die Abdeckung in horizontaler Funktionsstellung befindet.

6. Vorrichtung nach einem der Ansprüche 1 bis 5, bei der die Anschlagflächen eine nach hinten gerichtete Schulter (10), die an einer der Ecken ausgebildet ist, und eine nach vorne gerichtete Schulter (9), die an jedem der Verbindungselemente ausgebildet ist, bilden, wobei die Schultern zusammenwirken, wenn die Ecken in den Verbindungselementen in Eingriff stehen, wobei sich die Abdeckung in im wesentlichen horizontaler Stellung befindet.

7. Vorrichtung nach einem der Ansprüche 1 bis 6, bei der die Verbindungselemente so angeordnet sind, daß sie eine Bewegung der Abdeckung nach vorne und nach unten bezüglich ihrer Seitenstützen unter einer gewissen Neigung der Abdeckung zur Horizontalen bis zu einem Anschlagspunkt gestatten und eine Drehbewegung der Abdeckung nach hinten und nach unten, wenn sie sich an diesem Anschlagspunkt befindet, verhindern.

8. Vorrichtung nach Anspruch 4 und 7, bei der der Hohlraum eine Verlängerung (20) aufweist, die allgemein nach vorne und nach unten ausgerichtet ist und die Ecke aufnehmen kann, wenn sich die Abdeckung unter der gewissen Neigung befindet.

9. Vorrichtung nach Anspruch 8, bei der die Verlängerung an ihrem nach vorne und nach unten gerichteten Endteil elastische Mittel (21) aufweist, die so angeordnet sind, daß sie ein Spiel der Abdeckung in dieser Richtung gestatten.
